# EUROPEAN PATENT SPECIFICATION

(11) **EP 1 789 501 B1**
(45) Date of publication and mention of the grant of the patent: **07.05.2008**
(21) Application number: 05778050.4
(22) Date of filing: 28.07.2005
(51) Int. Cl.: C09D 4/06, C09D 133/14

(54) **HIGH SOLIDS COATING COMPOSITION BASED ON THERMAL INITIATED FREE-RADICAL POLYMERIZATION**
BESCHICHTUNGSZUSAMMENSETZUNG MIT HOHEM FESTSTOFFGEHALT AUF BASIS VON THERMISCH INITIIERTER, RADIKALISCHER POLYMERISATION
COMPOSITION DE REVÊTEMENT TRÈS GARNISSANT FONDÉE SUR UNE POLYMÉRISATION THERMIQUE À RADICAUX LIBRES

(30) Priority: 30.07.2004 US 903087
(43) Date of publication of application: 30.05.2007
(73) Proprietor: E.I. du Pont de Nemours and Company, Wilmington, DE 19898 (US)
(72) Inventor: JOHNSON, Jeffery, W., Rochester, Michigan 48306 (US); PAQUET, Donald, A., Jr., Troy, MI 48085 (US); UHLIANUK, Peter, William, Romeo, MI 48065 (US); YUAN, San, C., Commerce Township, MI 48382 (US)
(74) Representative: Heinemann, Monica
(86) International application number: PCT/US2005/026950
(87) International publication number: WO 2006/015199

(56) References cited:
- EP-A- 0 997 510
- US-A1- 2003 166 787
- PATENT ABSTRACTS OF JAPAN vol. 2002, no. 02, 2 April 2002 (2002-04-02) & JP 2001 279132 A (SANYO CHEM IND LTD), 10 October 2001 (2001-10-10)

## Description

### FIELD OF THE INVENTION

This invention is directed to a coating composition and in particular to a high solids coating having a low VOC content (volatile organic content) primarily useful as a finish for automobile and truck exteriors.

### BACKGROUND OF THE INVENTION

Automobiles and trucks receive exterior finishes for several well known reasons. First, such finishes provide protection against corrosion. Second, consumers prefer an exterior finish having an attractive aesthetic appearance, including high gloss and excellent DOI (distinctness of image).

For instance, a typical automobile steel panel or substrate has several layers of finishes or coatings. The substrate is typically fust coated with an inorganic rust-proofing zinc or iron phosphate layer over which is provided a primer which can be an electrocoated primer or a repair primer. Optionally, a primer surfacer can be applied to provide for better appearance and/or improved adhesion. A pigmented basecoat or colorcoat is next applied over the primer. A typical basecoat or colorcoat comprises a pigment, which can include metallic flakes in the case of a metallic finish. In order to protect and preserve the aesthetic qualities of the finish on the vehicle, it is well known to provide a clear transparent topcoat over the colored basecoat, so thai the basecoat remains unaffected even on prolonged exposure to the environment or weathering.

Automotive coating compositions have, in recent years, been the subject of increasingly demanding regulations regarding emissions or volatile organic content (VOC) of the compositions. Even lower VOC requirements are expected to come into effect in future years. Consequently, various approaches to responding to these present or future regulations are being tried, including the development of aqueous coatings, powder coatings, high-solids thermosetting organic solvent based coatings, and high-solids photopolymerizable liquid coatings.

JP 2001 279132 A discloses a resin composition for a thermosetting coating which comprises as essential components (A) a polyester-based resin bearing at least one radically polymerizable unsaturated group at a molecular end and having a number average molecular weight, per unsaturated group, of 500-20,000 and/or an acrylic resin bearing at least one radically polymerizable unsaturated group in a molecular side chain and having a number-average molecular weight, per unsaturated group, of 1,000-20,000, (B) a polyfunctional (meth)acrylate having a number-average molecular weight, per (meth)acryloyl group, of 85-300 and (C) an organopolysiloxane bearing a radically polymerizable unsaturated group.

EP 0 997 519 A1 discloses a thermosetting high solids coating composition comprising a copolymer prepared by polymerizing vinyltrimethoxysilane and/or vinytriethoxysilane, N-methylol(meth)acrylamide alkyl ether and another polymerizable unsaturated monomer, a hydroxyl-containing resin and a curing catalyst, and a method for forming a topcoat using this composition.

While aqueous coating compositions offer lower emissions, they still contain significant amounts of organic cosolvent, and also have more elaborate and expensive handling and application requirements. Powder coatings have very low organic emissions but also require complete reinvestment in the paint facilities and to date have not exhibited the appearance and other properties desired. The thermosetting high solids or low solvent approach has a number of advantages including the exceptional appearance, durability and properties of such systems and the ability to be used in a current automotive plant with little or no change in facilities. A problem, however, with high-solids organic solvent based coatings has been that they require the presence of film forming solution polymers as the principal vehicle resin ingredient and thus still require considerable amounts of volatile organic solvent to maintain spray viscosities within acceptable limits. High-solids photopolymerizable liquid coatings, on the other hand, have very low organic emissions and even at 100% solids still have acceptable spray viscosities, but also require exposure to actinic light, such as LTV or EB light, to polymerize the coating after application to the substrate. As such, these coatings have limited utility when used to coat three-dimensional objects such as automobile and truck bodies, since certain areas of the object will be shaded to the UV or EB light and, without significant reinvestment in the paint facilities in current assembly plants, the coating will not develop adequate film properties in those areas.

A goal has therefore been to develop an automotive coating composition that offers low solvent emissions, but that still can be easily applied with conventional equipment in existing paint facilities, and does not require actinic light to initiate polymerization. Such coatings must also meet today's performance requirements for automotive finishes, such as durability and appearance.

### SUMMARY OF THE INVENTION

Now it has been discovered that high solids or low solvent thermosetting coating composition with this unique combination of properties can be formulated by incorporating in a portion of the film forming binder or vehicle resin system, a thermal polymerization initiator and a radically polymerizable ethylenically unsaturated compound which serves a dual function of solvent and auxiliary crosslinking agent for the coating system to deliver low VOC and the desired combination of rheological and physical properties.

More particularly, the invention herein provides a thermosetting high solids coating composition having a total solids content of at least 80% by weight, based on the weight of the total composition, comprising a film forming binder that contains:
(a) a curable film-forming binder component;
(b) monomer, dimer or short chain oligomer having ethylenic unsaturation; and
(c) a thermal initiator system comprising at least one thermal initiator;
wherein (a), (b) and (c) total 100% of the binder.

Advantageously, despite the presence of the addition-polymerizable compound, no actinic light is required to effect curing of the composition.

The term "component" as employed in item (a) includes, polymers, oligomers, compounds and mixtures thereof.

Optionally, the binder may include (d) a crosslinking agent for binder material (a) to provide for additional crosslinking through condensation type reactions. If condensation type reactions are utilized in the coating on curing, such coatings will not be able to achieve 100 percent solids, since in most cases minor amounts of organic volatiles will be emitted on curing.

The present invention also contemplates the use of coatings having up to 100 percent solids content (i.e., approaching 0 VOC content). Even at such high solids levels, the coatings have sufficient low viscosity so as to enable easy application such as by spraying, dipping, roll coating, without the need to employ an appreciable amount of volatile solvents.

The present composition is especially useful for finishing the exterior of automobiles and trucks and parts thereof. The present composition, depending on the presence of pigments and other conventional components, can be used as a primer, primer surfacer, basecoat, and/or clearcoat. It is especially advantageous for use in a clearcoat. The invention also refers to a substrate, such as a vehicle body or part thereof coated with the coating composition disclosed herein.

### DETAILED DESCRIPTION OF THE INVENTION

The present invention is directed to a high-solids or low solvent coating composition comprising a novel combination of binder components. More particularly, the invention herein provides for a high-solids coating composition having a total solids concentration of at least 80 percent, preferably at least 90 percent, and most preferably in a range from about 90 to 100 percent, in weight percentages based on the total weight of the composition, and balance, if any, volatile organic liquid carrier which can be a solvent for the binder or a mixture of solvents. It should be understood that "total solids" refers to the total amount of non-volatile components in the composition even though some of the components may be non-volatile liquids rather than solids at room temperature.

Such compositions are able to be formulated with less solvents than conventional solvent based coatings, while still having sufficient low viscosity so as to enable easy application such as by spraying, dipping, roll coating, without the need to employ an appreciable amount of volatile solvents. Even in absence of solvent, these compositions are usually a flowing liquid at room temperature that can be applied with conventional equipment located in automobile and truck assembly plants.

In general, the total mixture of film forming components contained in a coating composition is collectively referred to as the "vehicle resin system" or "binder" or "binder solids". The binder in the present invention typically makes up 50-95% of the total solids present in the composition. Generally, catalysts, pigments, or chemical additives such as stabilizers are not considered part of the binder solids. Non-binder solids other than pigments usually do not amount for more than 5-10% by weight of the composition. In this disclosure, the term binder includes all film-forming polymers and oligomers and crosslinking agents, as well as the thermal initiator and addition-polymerizable compound used herein to deliver the rheological and physical properties desired.

Due to the high solids content, a particular advantage of the coating composition of this invention is that it also has a low VOC content, i.e., generally a VOC content of less than 0.24 kilogram of organic solvent per liter (2 pounds per gallon) of composition. The novel coating composition can readily be formulated to have a VOC of less than 0.12 kg per liter (1 pound per gallon), which is most desirable.

The VOC of the coating is determined in accordance with the procedure provided in EPA Method 24.

The binder of the coating composition of this invention suitably contains from 1 to 99% by weight of momoner, dinner or short chain oligomer having ethylene unsaturation and thermal initiator, and correspondingly 99 to 1% by weight of a conventional binder system comprising the curable film-forming binder component and optional crosslinking agent. One preferred composition which is suitable for use as a clearcoat finish contains 70 to 80% by weight, based on the weight of the binder, of film forming binder polymer or oligomer and optional crosslinking agent, and correspondingly 30 to 20% by weight, based on the weight of the binder of the momoner, dinner or short chain oligomer having ethylene unsaturation and thermal initiator.

As indicated above, typically, the coatings of this invention contain one or more conventional film-forming binders. Depending on the binder system selected, the coatings of this invention may be self-crosslinking systems or systems that crosslink by external means. If the binders are not self-crosslinking or self-drying, they may optionally also contain crosslinking agents.

Neither the binder component nor the crosslinking component that may optionally be present is subject to any limitations of any kind. The choice of film-forming binders will vary depending on the crosslinking chemistry employed, as well as other factors known in the art. The choice of crosslinking agents that may optionally be present is also not critical; it is dependent, in a manner known to those skilled in the art, on the functionality of the binders.

The broad concept of this invention is therefore applicable to a variety of binder systems that are used nowadays in automotive topcoats, including hydroxy/melamine, hydroxy/isocyanate, carbamate/melamine, silane/melamine, epoxy/acid, and blends thereof. A preferred coating system comprises, as film-forming polymer or oligomer, a carbamate acrylic material, and as crosslinking agent, a monomeric or polymeric melamine.

In general, the film forming polymers or oligomers used in any of the above systems can be prepared by well known solution polymerization techniques and are typically acrylic, polyester, polyether or polyurethane containing materials with the above pendant and/or terminal groups for crosslinking purposes. Acrylic and polyurethane polymers and oligomers are generally preferred in automotive topcoats.

For the sake of brevity, the present invention will now be discussed in the context of carbamate and carbamate-melamine binder systems, although one skilled in the art would understand that the present invention is also useful for use in other binder systems, such as those mentioned above.

In this embodiment, the coatings in which the mononer, dinner or short chain oligomer having ethylene unsaturation and thermal initiator are added contain a carbamate-functional binder polymer or oligomer. The polymer is typically an acrylic containing material. One way to prepare such polymers is by copolymerizing a carbamate functional acrylic monomer with, for example, other ethylenically unsaturated monomers by solution polymerization techniques well known in the art. Another technique involves reacting a hydroxyl-containing compound with the isocyanate group of an isocyanate functional acrylic to form the carbamats-functional acrylic. All of these monomers are well known in the art and for simplicity sake will not be described in detail herein. The resulting polymers will typically have a weight average molecular weight of 2,000-20,000,typically from 4,000-6,000.

All molecular weights disclosed herein are determined by GPC (gel permeation chromatography) using polystyrene as the standard.

Lower molecular weight carbamate-functional materials, such as oligomeric materials, may also be used in the practice of the present invention. Such compounds can be prepared in a variety of ways. One way to prepare such carbamate-functional materials is to react a monoalcohol (preferably an aliphatic, including cycloaliphatic, monofunctional alcohol) with a polyisocyanate (preferably an aliphatic, including cycloaliphatic, diisocyanate, e.g., HDI, IPDI, or an aliphatic, including cycloaliphatic, polyisocyanate, e.g., the biuret or isocyanurate of HDI, IPDI) to form a compound with multiple secondary carbamate groups. This reaction is accomplished by heating a mixture of the polyisocyanate and the monoalcohol, preferably in the presence of a catalyst as is known in the art. These materials will typically have a number average molecular weight of 75-2,000, and preferably from 75-1500. Mixtures of the polymeric and non-polymeric or oligomeric carbamate functional compounds may also be utilized in the preferred coating compositions of the present invention.

If (meth) acrylated or other ethylenically carbamates are employed herein as the film forming binder component, it is entirely possible to rely on the (meth)acrylate or other ethylenically unsaturated functionality of the resin for crosslinking purposes without the need to add an additional crosslinking agent, since the (meth)acrylate and vinyl groups will also participate in the free radical polymerization reactions on curing. However, for suitable cross-link density and other end use properties, most carbamate coating compositions will contain a condensation type crosslinking agent in conjunction with the carbamate functional binder material.

A number of materials can be used as the crosslinking agent to react with carbamate to rapidly form a durable film at elevated baking temperatures. Typically aminoplast crosslinking agents, which have at least two reactive sites that are capable of reacting with the carbamate functional groups on the binder, are employed. The preferred aminoplast crosslinking agent is a melamine formaldehyde resin, with alkylated melamines being most preferred. Typical alkylated melamine formaldehyde resins, commonly referred to as melamines, include any of the conventional monomeric or polymeric alkylated melamine formaldehyde resin that are partially or fully alkylated. Preferably, the crosslinking agent is fully alkylated. Useful crosslinking agents are methylated, butylated or isobutylated melamine formaldehyde resins that have a degree of polymerization of about 1-3. Such crosslinking agents typically have a number average molecular weight of 500-1,500. Mixtures of these crosslinking agents can also be used. Of course, depending on the crosslinking chemistry other crosslinking agents such as isocyanates can be used.

Usually to form a high quality carbamate melamine coating composition which will crosslink under elevated baking temperatures of 60-180°C for 5-60 minutes, it is generally desired to include the alkylated melamine formaldehyde crosslinking agent in the composition in a range of 10 to 50%, preferably 15 to 40% by weight, based on total weight of the conventional binder content of the coating.

Other film-forming polymers and crosslinking agents can also be used to form the conventional binder portion of the composition depending on the crosslinking chemistry and the specific film properties desired.

As indicated above, the addition-polymerizable material will only be used as a portion of the binder system. It is generally preferred to have the bulk of crosslinking obtained by using conventional film-forming polymers and optional crosslinking agents.

The addition-polymefizable or radically-polymerizable compounds used in the composition are ethylenically unsaturated monomers and/or oligomers that are capable of forming a high polymer by thermal free-radical initiated chainpropagating addition polymerization. The addition-polymerisable compound is a monomer, dimer, or short chain oligomer having ethylenic unsaturation, particularly vinyl, acrylate or methacrylate-ethylenic unsaturation, preferably compounds having an ethylenic unsaturation functionality of 2 or greater, i.e., di- or polyunsaturated compounds containing at least two ethylenically unsaturated groups per molecule. Some monounsaturated compounds can be used herein such as isobornyl acrylate. However, monounsaturated compounds are typically avoided unless they contain an additional reactive site described below, since without such site they are normally much too toxic and too volatile to be spray applied.

Optionally, the ethylenically unsaturated compound can have reactive functional groups built therein, in addition to the polymerizable group(s), such as a hydroxyl, silane, carbamate group, capable of reacting on curing through condensation reactions with itself and/or with a melamine component or other crosslinking/film-forming component in the composition for additional crosslinking and toughness of the finish and shorter curing times.

It is generally desired that the addition-polymerizable compounds in accordance with the invention are nongaseous compounds having a boiling point above 100°C at atmospheric pressure and have a number average molecular weight (Mn) of 300-3,000.

While not wishing to be bound by theory, the inclusion of such polymerizable compounds in the binder is believed to serve a dual function, namely that of solvent as well as in situ binder polymer for the coating system to deliver low VOC and desired rheological and physical properties.

Examples of diunstaurated monomers suitable for use herein are: diacrylates and dimethacrylates such as alkylene glycol di(meth)acrylate, polyethylene glycol di(meth)acrylate, 1,3-butane diol di(meth)acrylate, vinyl (meth)acrylate, allyl (meth)acrylate, divinyl benzene, dipropylene glycol di(meth)acrylate, tripropylene glycol di(meth)acrylate, 1,6-hexanediol di(meth) acrylate, and alkoxylated diol diacrylates such as propoxylated neopentyl glycol diacrylate. Examples of polyunsaturated monomers are: triacrylates and trimethacrylates such as glycerine tri(meth)acrylate, trimethylolpropane tri(meth)acrylate, pentaerythritol tri(meth)acrylate, pentaerythitol tetra(meth)acrylate, or higher. Also useful are low molecular weight oligomers such as (meth)acrylate terminated urethane oligomers, e.g., low molecular polyurethanes prepared from trimers of diisocyanates and hydroxy functional alkyl methacrylates; (meth)acrylate terminated epoxy oligomers; and (meth)acrylate terminated polyester oligomers, e.g., low molecular weight polyesters can also be used which have been acrylated through either transesterification, or through post reaction of epoxy containing acrylates or methacrylates, such as glycidyl acrylate or glycidyl methacrylate, and pendant acid groups on the polyester. By "low molecular weight" for this component, it is meant no more than about 3000 (number average). One preferred urethane oligomer is the adduct of the isocyanurate of hexamethylene diisocyanate with two moles of monoaliphatic alcohol (generates two carbamate reactive sites) and one mole of hydroxy functional (meth) acrylate. Also useful are (meth)acrylate terminated urethane oligomers prepared from hydroxy functional (meth)acrylates such as those described in U.S. Pat. No. 5,744,282.

Of course, mixtures of the above-mentioned compounds are also suitable for use herein.

To initiate in situ polymerization of the addition-polymerizable compounds on curing of the coating, the coating contains a thermal initiator system comprising at least one thermal initiator.

The thermal polymerization initiator used in the composition is a thermal free radical initiator. Typically, the thermal initiator is present in the composition in sufficient amount to effect polymerization of the addition-polymerizable components on thermal curing of the composition. Typically this means an amount ranging from 0.1-20% by weight, preferably 0.5-1 %, based on the weight of the radically polymerizable portion of the binder.

Any of the conventional azo or peroxide type polymerization initiators can be used, provided it has solubility in the coating solution, and has an appropriate half life at the temperature of polymerization of the radically polymerizable component "Appropriate half life" as used herein is a half life of 10 to 30 minutes. Peroxy based thermal initiators are preferred, since these materials are liquid at room temperature at atmospheric pressure. Examples of peroxy based thermal initiators are benzoyl peroxide, lauryl peroxide, dicumyl peroxide, t-butyl peroxy(2-ethyl hexanoate), t-butyl peroxyacetate, t-butyl peroxypivalate, t-butyl peroctoate, t-amyl peroctoate, and cumene hydroperoxide. Examples of azo type initiators which can also be used are as 2,2'-azobis (isobutyronitrile), 2,2'-azobis (2,4-dimethylvaleronitrile), 2,2'-azobis (methylbutyronitrile), and 1,1'-azobis (cyanocyclohexane).

As indicated above, it is possible to rely entirely on an ethylenically unsaturated groups in the film-forming binder component, along with the addition-polymerizable compound and thermal initiator as the main film-forming components in the coating of this invention. Such compositions can be formulated to be 100% solids coatings, provided the viscosity is such that the coating composition can readily be applied. However, for suitable cross-link density and other end use properties such as durability and appearance, most compositions in conjunction with the present invention contain an additional crosslinking agent. However, as the crosslinking content increases, the level of solids will be reduced, since minor amounts of organic volatiles will be emitted on curing due to condensation reactions. It may be possible in such coatings to reach 100% spray solids but less than that on curing.

Optionally, the coating composition can include a co-catalyst to prevent oxygen inhibition of the free radical polymerization reactions. Suitable cocatalysts include cobalt complexes containing a Co⁺² group, a Co⁺³ group, or both. Suitable co-catalyst include cobalt acetyl acetonate carboxylates such as cobalt (II)-ethylhexanoate, or other chelated cobalt compounds. Preferably, these cocatalysts are used in me amount of 0.1 to 5.0%, based on me weight of the binder.

Additionally, the coating composition of this invention can include a number of other ingredients as are known in the art to enhance preparation of the composition as well as improve final properties of the coating composition and the finish. For example, it is often desirable to include additional low molecular weight compatible film-forming polymers and/or oligomers and/or crosslinking agents and/or reactive diluents in the binder in conjunction with the above-mentioned components to improve specific properties, preferably in the range of 0 to 45% by weight, based on the weight of the binder. Examples of other film-forming polymers aud/or oligomers include acrylic polyols, acrylourethanes, acrylosilanes, polyester polyols, polyester urethanes, polyethers, polyether urethanes, and polyurethane polyols that are compatible with the other components of the binder. One particularly preferred class of film forming materials are silane functional acrylic oligomers containing one or more hydrolyzable silane groups, such as alkoxy silane functional acrylosilane polymers, that are reactive with themselves and the hydroxyl groups of the polyester and/or monomer to provide for additional crosslinking and a hard, tough, durable finish within a short period of time after application. Additional crosslinking agents, for example any of the conventional polyisocyanate crosslinking agents, may also be used. Typically useful reactive diluents include low molecular weight polyester polyols, silicates, urethane diols, and cycloaliphatic diepoxides. By "low molecular weight" for this component, it is meant no more than about 3000 (number average).

To achieve faster cure of the composition, particularly in conjunction with the optional crosslinking agent, a catalyst is typically added to catalyze the crosslinking of reactive components present in the composition. Typical of such catalysts are sulfonic acids, such as dodecylbenzene sulfonic acid, either blocked or unblocked, are effective catalysts. Useful blocked acid catalysts are dodecyl benzene sulfonic acid blocked with an amine, such as amino methyl propanol or dimethyl oxazolidine. Other useful catalysts will readily occur to one skilled in the art. Preferably, these catalysts are used in the amount of 0.1 to 5.0%, based on the weight of the binder.

In addition, a composition according to the present invention can contain a variety of other optional ingredients, including pigments, pearlescent flakes, fillers, plasticizers, antioxidants, surfactants and flow control agents.

To improve weatherability of a finish produced by the present coating composition, an ultraviolet light stabilizer or a combination of ultraviolet light stabilizers can be added in the amount of 0.1-5% by weight, based on the weight of the binder. Such stabilizers include ultraviolet light absorbers, screeners, quenchers, and specific hindered amine light stabilizers. Also, an antioxidant can be added, in the amount of 0.1-5% by weight, based on the weight of the binder. Typical ultraviolet light stabilizers that are useful include benzophenones, triazoles, triazines, benzoates, hindered amines and mixtures thereof.

The composition can also include conventional formulation additives such as flow control agents, for example, Resiflow S (polybutylacrylate), BYK 320 and 325 (high molecular weight polyacrylates); rheology control agents, such as fumed silica, microgels, and non-aqueous dispersion polymers; water scavengers such as tetrasilicate, trimethyl orthoformate, and triethyl orthoformate.

A solvent may optionally be utilized in the coating composition of the present invention. Any of the conventional organic solvents or blends of solvents can be used in the organic liquid carrier to disperse and/or dilute the above ingredients to form a coating composition having the desired rheological (spray) properties, provided that the selection of solvents is such that the polymeric binder constituents are compatible and give a high quality coating. The following are examples of solvents that can be used to prepare the composition: methyl ethyl ketone, methyl amyl ketone, methyl isobutyl ketone, toluene, xylene, acetone, ethylene glycol monobutyl ether acetate and other esters, ethers, ketones and aliphatic and aromatic hydrocarbon solvents that are conventionally used.

When the present composition is used as a clearcoat (transparent topcoat) over a pigmented colorcoat (basecoat) to provide a colorcoat/clearcoat finish, small amounts of pigment can be added to the clear coat to provide special color or aesthetic effects such as tinting.

The present composition can be pigmented and used as the colorcoat, monocoat, primer, or primer surfacer. The composition has excellent adhesion to a variety of metallic or non-metallic substrates, such as previously painted substrates, cold rolled steel, phosphatized steel, and steel coated with conventional primers by electrodeposition. The present composition can also be used to coat plastic substrates such as polyester reinforced fiberglass, reaction injection-molded urethanes and partially crystalline polyamides.

When the present coating composition is used as a basecoat, typical pigments that can be added to the composition include the following: metallic oxides such as titanium dioxide, zinc oxide, iron oxides of various colors, carbon black, filler pigments such as talc, china clay, barytes, carbonates, silicates and a wide variety of organic colored pigments such as quinacridones, copper phthalocyanines, perylenes, azo pigments, indanthrone blues, carbazoles such as carbazole violet, isoindolinones, isoindolones, thioindigo reds, benzimidazolinones, pearlescent pigments such as mica, and metallic flake pigments such as aluminum flake

The pigments can be introduced into the coating composition by first forming a mill base or pigment dispersion with any of me aforementioned polymers used in the coating composition or with another compatible polymer or dispersant by conventional techniques, such as high speed mixing, sand grinding, ball milling, attritor grinding or two roll milling. The mill base is then blended with the other constituents used in the coating composition to obtain the present coating compositions.

The coating composition can be applied by conventional techniques such as spraying, electrostatic spraying, dipping, brushing, and flowcoating. The preferred technique is spraying. The present composition can be used as an ambient cure, especially for refinish, or at elevated temperature. In OEM applications, the composition is typically baked at 100°-150°C for 15-30 minutes to form a coating 2.54-76.2mm (0.1-3.0 mils) thick. When the composition is used as a clearcoat, it is applied over the colorcoat, which can be dried to a tack-tree state and cured, or preferably flash dried for a short period before the clearcoat is applied. The colorcoat/clearcoat finish is then baked as mentioned above to provide a dried and cured finish.

It is customary to apply a clear topcoat over a basecoat by means of a "wet-on-wet" application, i.e., the topcoat is applied to the basecoat without curing or completely drying the basecoat. The coated substrate is then heated for a predetermined time period to allow simultaneous curing of the base and clear coats.

These coatings are also suitable as clear or pigmented coatings in industrial and maintenance, coating applications.

In summary, the thermosetting coating compositions of this invention can be formulated at very high solid concentrations using addition-polymerizable compounds in the binder system, with one significant advantage over high-solids photopolymerizable compositions in that no actinic light such as UV (ultraviolet) or EB (electron beam) light, is needed to initiate free radical polymerization of the radically polymerizable compounds. As indicated above, this is a particular advantage when coating motor vehicle bodies or parts thereof which are three dimensional objects and as such are shaded in some areas to UV/EB light and cannot be completely cured. Since the present invention does not rely on light initiated curing, the composition is uniquely suited to work in present day automotive and truck assembly plants because ovens are already in place to initiate the free radical polymerization and curing on the substrate.

The following examples illustrate the invention. All parts and percentages are on a weight basis unless otherwise indicated. Molecular weights are determined by gel permeation chromatography using polystyrene, as the standard.

### Testing Procedures Used in the Examples

### Sag Measurement-

The sag for an automotive coating is the film thickness at which a vertically applied coating appears to sag or drip down the vertical surface. Sag is measured via the following test method. A 25.4 x 25.4 cm (10 x 10 inch) steel panel having six 0.635 cm (¼ inch)holes arrayed down the left or right side from top to bottom is first phosphated and then electrocoated. The coating composition to be evaluated is then applied in a wedge format such that the minimum film build is at the top of the panel with the film build increasing to the x maximum film at the bottom of the panel. During application, the coating is spray applied with the holes in a vertical position on the left or right side of the panel and then is baked vertically with the rivet holes aligned horizontally at the top of the panel. Sag is marked in the area below holes where a teardrop forms or where a 12.7cm (½ inch) windowpane is measured at the top of the panel, whichever occurs first The position where sag first occurs is noted. The coating, film thickness is measured at the sag position and the sag value is reported as a film thickness in mils or micrometers. A rating of at least 20 micrometers is an acceptable minimum.

Hardness - Tukon Hardness - test method ASTM D1474.

### Distinctness of lmage (DOI) -

DOI was measured using a HunterLab Model RS 232 (HunterLab, Reston, VA) - a rating of at least 70 is an acceptable minimum.

20° Gloss Measurement - test method ASTM D523 - a rating-of at least 80 is an acceptable minimum.

### Dry Mar Resistance -

The clear coating of the panel was coated with a thin layer of Bon Ami abrasive supplied by Faultless Starch/Bon Ami Corporation, Kansas City, Missouri. The panels were then tested for mar damage by applying 10 double rubs against a green felt wrapped fingertip of A.A.T.C.C. Crockmeter (Model CM-1, Atlas Electric Devices Corporation, Chicago, Illiaois). The dry mar resistance was recorded as percentage of gloss retention by measuring the 20° gloss of the mar areas versus the non-marred areas of the coated panels.

### Wet Mar Resistance

Similar procedure was used as above except that a wet alumina slurry was used instead of the Bon Ami abrasive. The alumina slurry consisted of 294 parts deionized water, 21 parts ASE-60 Thickener, 25 parts AMP 95% aqueous solution of amino methyl propanol and 7 parts of aluminum oxide (120# grit).

### Etch Depth Measurement - Synthetic Acid Rain Test

To measure the acid rain etch resistance of the clearcoat, a synthetic rain formulation was prepared as follows:

| Cationic Aqueous Solution | |
|---|---|
| 28% Aqueous ammonia | 35.7 g |
| 95% Calcium hydroxide | 10.5 g |
| 95% Sodium hydroxide | 12.6 g |
| 85% Potassium hydroxide | 1.2 g |

The above constituents are mixed with deionized water to form 1000 g of an aqueous cationic solution.

| Anionic Aqueous Solution | |
|---|---|
| 98% Sulfuric acid | 102.0 g |
| 70% Nitric acid | 42.9 g |
| 35% Hydrochloric acid | 200.0 g |

The above constituents are blended with deionized water to form 1000 g aqueous anionic solution.

| Synthetic Rain Liquid | |
|---|---|
| Cationic Aqueous Solution (a) | 100 g |
| Anionic Aqueous Solution (b) | 33 g |

The anionic aqueous solution is added to the cationic aqueous solution until the pH =1 and then mixed for 24 hr. and the pH is readjusted to 1.

0.2 ml of the synthetic acid rain was applied on the surface of a coated panel and placed in a gradient oven at 60°C for 1 hour. The degree of etch was observed visually.

### % Non-volatile or Total Solids -.

% Non-volatile or "total solids" of the coating composition was determined by test method ASTM D-1644.

### EXAMPLES

The following resins were prepared and used as indicated in Clearcoat Examples 1 and 2.

### Resin Example 1

### Preparation of an acrylic Carbamate Oligomer 1

| Portion I | Parts by Weight (g) |
|---|---|
| Isocyanurate of hexane diisocyanate (Desmodur® 3300 from Bayer Corporation, Pittsburgh, Pa) | 349.2 |
| Dibutyl tin dilaurate catalyst | 0.1 |
| Portion II | |
| Propylene glycol N-propyl ether (Dowanol® PnP from Dow Chemical, Midland, MI) | 141.804 |
| 4-Hydroxy butyl acrylate (HBA) | 86.502 |
| Portion III | |
| Alkylated Melamine (Cymel® 301 from Cytec Industries, West Patterson, NJ) | 150 |
| Total | 727.606 |

Portion I was pre-mixed and charged into the reaction flask and heated to 70°C under agitation and a nitrogen blanket. Then Portion II was added over a 60 minute period, in order to keep the exotherm temperature at or below 90°C. The reaction mixture was then held at 80-90°C while mixing until essentially all of the isocyanate was reacted as indicated by infrared scan. Immediately following that, Portion III was added and the mixture was cooled to room temperature. The resulting solution was an acrylic functional carbamate oligomer and 20% melamine.

### Resin Example 2

### Preparation of non-acrylated Carbamate Oligomer 2

| Portion I | Parts by Weight (g) |
|---|---|
| Iso-butanol | 600 |
| Dibutyl tin dilaurate catalyst | Two Drops |
| Portion II | |
| Biuret of Hexamethylene diisocyanate (Desmodur® N-75 ba from Bayer Corporation, Pittsburgh, Pa) | 2040 |
| Total | 2640 |

Portion I was pre-mixed and charged into the reaction flask and heated to 80°C under agitation and a nitrogen blanket. Then Portion II was added over a 60 minute period, in order to keep the exotherm temperature at or below 105°C. The reaction mixture was then held at 100-105°C while mixing until essentially all of the isocyanate was reacted as indicated by infrared scan. Immediately following that, the mixture was cooled to room temperature. The resulting product was viscous.

### Examples 1-2

### Preparation of Clearcoat Compositions

Two clearcoat compositions were prepared by blending together the following ingredients in the order given:

**Table 1**

| **Clearcoat Formulations** | | |
|---|---|---|
| | Ex. 1 | Ex. 2 |
| Carbamate¹ | 40% | -- |
| Carbamate² | | 35% |
| Diacrylate³ | 30% | 20% |
| Melaanine⁴ | 27% | 30% |
| Diacrylate⁵ | -- | 8.5% |
| Catalyst⁶ | 2% | 2% |
| Flow Aid⁷ | 0.1% | 0.2% |
| Peroxide Initiator⁸ | 1.5%. | 0.1% |

| | | |
|---|---|---|
| Table Footnotes *All the numbers in this table are by % non-volatile. 1. Resin Example 1. 2. Resin Example 2. 3. SR9003 propoxylated (2) neopentyl glycol diacrylate supplied by Sartomer, Exton, Pennsylvania. 4. Cymel^{®} 301 monomeric methylated melamine supplied by Cytec Industries Inc., West Patterson, New Jersey. 5. Dipropylene glycol diacrylate supplied by Aldrich Chemical Milwaukee, WL 6. Nacure^{®} 5225 dodecylbenzene Sulfonic Acid supplied by King Industries, Norwalk, Connecticut. 7. Resiflow^{®} S supplied by Estron Chemicals, Inc., Parsippany, New Jersey. 8. t-Butyl Peroxy Ethylhexanoate Peroxide Initiator supplied under the tradename Luperox^{®} 26 by Atofina, Philadelphia, Pennsylvania. | | |

The resulting clearcoat compositions had theoretical solids contents of 92.0% & 97% respectively and viscosities of 43 and 45 seconds measured with a # 4 Ford cup at 25°C. The analytical spray weight solids were 90.1% & 92.6% respectively. These coatings also had VOC's of less than 0.036 kg/l (0.3 Ibs/gal).

### Paint Results

The coating compositions of Examples 1-2 were each hand-sprayed to a black basecoat over a steel substrate which was already coated with a layer each of electrocoat and primer surfacer. The basecoat used is commercially available from DuPont under DuPont Code of M-6373 (Ebony). The primer surfacer used is commercially available from DuPont under DuPont Code of 708543301 (Taupe). The electrocoat used is commercially available from DuPont under the name of ED5050.

The basecoat was applied by hand-spray in one coat to a primed, electrocoated steel substrate. After an approximately 3 minutes of flash time under a booth condition 23,9°C (75°F) and 55% humidity, the coating compositions of Examples 1-2 were applied to the base-coated panels in two coats with 60 seconds flash in between. The applied clearcoats were allowed to flash in air for approximately 10 minutes before baking in a 140.6°C (285°F) oven for 30 minutes.

The test results are summarized in Table 2 below.

**Table 2**

| (microns) | Example 1 | Example 2 |
|---|---|---|
| Sag Thickness (micrometers) | 36 | 26 |
| Tukon Hardness (Knoops) | 9.3 | 12.5 |
| DOI | 88 | 90 |
| Gloss | 94 | 84 |
| Wet Mar %Retention | 89.4 | 93 |
| Dry Mar %Retention | 96.8 | 82 |
| Etch (first spot temp) | 65°C | 80°C |
| Etch (Sum of Ratings) | 20 | 24 |
| % Solids | 90.1 | 92.6 |

The test results show that a high gloss and high DOI etch resistant coating can be spray applied at nearly 100% solids coatings and can form a finish of automotive quality.

This invention is not limited by the illustrative embodiments set forth herein, but rather is defined by the following claims.

## Claims

1. A thermosetting high-solids coating composition having a solids content of at least 80% by weight, based on weight of total coating composition, comprising a film-forming binder, wherein the binder contains:
(a) one or more film forming binder component;
(b) an optional crosslinking agent for component (a); monomer, dimer or short chain oligomer having ethylenic unsaturation and and
(d) a thermal initiator system comprising at least one thermal initiator; wherein (a), (b), (c) and (d) total 100% by weight of the binder.

2. The coating composition of claim 1 wherein the binder contains a crosslinking agent component (b).

3. The coating composition of claim 1 having a votatile organic (voc) content of less than 0.24 kilogram of organic solvent per liter (2 pounds per gallon).

4. The coating composition of claim 1 wherein the solids content is at least 90%.

5. The coating composition of claim 1 comprising up to 20% by weight based on total weight of said composition of volatile organic liquid carrier.

6. The coating composition of claim 1 in which the thermal polymerization initiator is a thermal peroxide initiator.

7. The coating composition of claim 1 in which the monomer, dimer or short chain oligomer as at least two polymerizable unsaturated groups per molecule.

8. The coating composition of claim 1, **characterized in that** (c) is a monounsaturated compound containing an additional reactive site, preferably a hydroxyl, silane or carbamate group.

9. The coating composition of claim 1 in which the monomer, dimer or short chain oligomer is selected from the groups consisting of diacrylates, dimethacrylates, triacrylates, trimethacrylates, and mixtures thereof.

10. The coating composition of claim 2 in which the binder component (a) contains a carbamate-functional material and the crosslin1cing agent (b) is a monomeric or polymeric partially or fully alkylated melamine formaldehyde resin.

11. The coating composition of claim 1 wherein components (a) and (b) comprise 1 to 99% weight-of-the-binder-and-correspondingly- components (c) and (d) comprise 1 to 99% by weight of the binder.

12. The coating composition of claim 1, wherein said composition is a clearcoat for a colorcoat/clearcoat finish.

13. A substrate coated with a dried and cured layer of the composition of claim 1.

14. The substrate of claim 13 in which the substrate is a vehicle body or part thereof.

15. The coating composition of any one of claims 1 to 12,
**characterized in that**
(c) is a non gaseous compound having a boiling above 100°C at atmospheric pressure and a number average molecular weight of 300-3,000; and
(d) is a liquid thermal peroxide polymerization initiator.

## Patentansprüche

1. Duroplastische Beschichtungszusammensetzung mit hohem Feststoffgehalt, die einen Feststoffgehalt von mindestens 80 Gew.%, auf das Gewicht der gesamten Beschichtungszusammensetzung bezogen, aufweist, umfassend ein filmbildendes Bindemittel; wobei das Bindemittel folgendes enthält:
(a) eine oder mehrere filmbildende Bindemittelkomponente(n);
(b) ein wahlweises Vernetzungsmittel für die Komponente (a);
(c) ein Monomer, Dimer oder kurzkettiges Oligomer mit einer ethylenischen Ungesättigtheit und
(d) ein thermisches Initiatorsystem umfassend mindesten einen thermischen Initiator;
wobei (a), (b), (c) und (d) insgesamt 100 Gew.-% Bindemittel darstellen.

2. Beschichtungszusammensetzung nach Anspruch 1, wobei das Bindemittel eine Vemetzungsmittelkomponente (b) enthält.

3. Beschichtungszusammensetzung nach Anspruch 1, die einen Gehalt an flüchtigen organischen Substanzen (VOC) von weniger als 0,24 Kilogramm organisches Lösungsmittel pro Liter (2 Pfund pro Gallone) aufweist.

4. Beschichtungszusammensetzung nach Anspruch 1, wobei der Feststoffgehalt mindestens 90 % beträgt.

5. Beschichtungszusammensetzung nach Anspruch 1 umfassend bis zu 20 Gew.%, auf das Gesamtgewicht der Zusammensetzung bezogen, an flüchtigem organischen flüssigem Träger.

6. Beschichtungszusammensetzung nach Anspruch 1, wobei der thermische Polymerisationsinitiator ein thermischer Peroxidinitiator ist.

7. Beschichtungszusammensetzung nach Anspruch 1, wobei das Monomer, Dimer oder kurzkettige Oligomer mindestens zwei polymerisierbare ungesättigte Gruppen pro Molekül aufweist.

8. Beschichtungszusammensetzung nach Anspruch 1, **dadurch gekennzeichnet, dass** (c) eine monoungesättigte Verbindung ist, die eine zusätzliche reaktive Stelle, bevorzugt eine Hydroxyl-, Silan- oder Carbamatgruppe, enthält.

9. Beschichtungszusammensetzung nach Anspruch 1, wobei das Monomer, Dimer oder kurzkettige Oligomer aus der Gruppe ausgewählt ist bestehend aus Diacrylaten, Dimethacrylaten, Triacrylaten, Trimethacrylaten und Mischungen derselben.

10. Beschichtungszusammensetzung nach Anspruch 2, wobei die Bindemittelkomponente (a) ein carbamatfunktionelles Material enthält und das Vernetzungsmittel (b) ein monomeres oder polymeres, teilweise oder vollständig alkyliertes Melaminformaldehydharz ist.

11. Beschichtungszusammensetzung nach Anspruch 1, wobei die Komponenten (a) und (b) 1 bis 99 Gew.-% Bindemittel umfassen und die Komponenten (c) und (d) entsprechend 1 bis 99 Gew.-% Bindemittel umfassen.

12. Beschichtungszusammensetzung nach Anspruch 1, wobei die Zusammensetzung ein Klarlack für einen Farblack-/Klarlack-Decklack ist.

13. Substrat, das mit einer getrockneten und ausgehärteten Schicht der Zusammensetzung nach Anspruch 1 beschichtet ist.

14. Substrat nach Anspruch 13, wobei das Substrat eine Fahrzeugkarosserie oder ein Fahrzeugteil derselben ist.

15. Beschichtungszusammensetzung nach irgendeinem der Ansprüche 1 bis 12, **dadurch gekennzeichnet, dass**
(c) eine nicht-gashaltige Verbindung mit einem Siedepunkt bei über 100 °C bei Luftdruck und einer zahlendurchschnittlichen Molmasse von 200 - 3000 ist; und
(d) ein flüssiger thermischer Peroxidpolymerisationsinitiator ist.

## Revendications

1. Composition de revêtement thermodurcissable à haute teneur en solides dans laquelle la teneur en solides est d'au moins 80 % en poids (sur la base du poids total de la composition de revêtement) qui comprend un liant filmogène, où le liant contient:
(a) un ou plusieurs composants liants filmogènes;
(b) en option un agent de réticulation du composant (a);
(c) un monomère, dimère ou oligomère à chaîne courte à insaturation éthylénique; et
(d) un système amorceur thermique qui comprend au moins un amorceur thermique;
où (a), (b), (c) et (d) représentent 100 % en poids du liant.

2. Composition de revêtement selon la revendication 1, dans laquelle le liant contient un composant d'agent de réticulation (b).

3. Composition de revêtement selon la revendication 1, ayant une teneur en composés organiques volatils (COV) qui est inférieure à 0,24 kilogramme de solvant organique par litre (2 livres par gallon).

4. Composition de revêtement selon la revendication 1, dans laquelle la teneur en solides est d'au moins 90 %.

5. Composition de revêtement selon la revendication 1, qui comprend jusqu'à 20 % en poids, sur la base du poids total de ladite composition d'un véhicule liquide organique volatil.

6. Composition de revêtement selon la revendication 1, dans laquelle l'amorceur thermique de polymérisation est un amorceur thermique de type peroxyde.

7. Composition de revêtement selon la revendication 1, dans laquelle le monomère, le dimère ou l'oligomère à chaîne courte possède au moins deux groupes insaturés polymérisables par molécule.

8. Composition de revêtement selon la revendication 1, **caractérisée en ce que** (c) est un composé monoinsaturé qui contient un site réactif additionnel, préférablement un groupe hydroxyle, silane ou carbamate.

9. Composition de revêtement selon la revendication 1, dans laquelle le monomère, le dimère ou l'oligomère à chaîne courte est sélectionné dans le groupe consistant en des diacrylates, diméthacrylates, triacrylates, triméthacrylates et des mélanges de ceux-ci.

10. Composition de revêtement selon la revendication 2, dans laquelle le composant liant (a) contient un matériau à fonction carbamate et l'agent de réticulation (b) est une résine mélamine-formaldéhyde monomère ou polymère partiellement ou totalement alkylée.

11. Composition de revêtement selon la revendication 1, dans laquelle les composants (a) et (b) comprennent de 1 à 99 % en poids du liant et les composants (c) et (d) comprennent en conséquence de 1 à 99 % du liant.

12. Composition de revêtement selon la revendication 1, où ladite composition est un enduit transparent qui permet de produire un revêtement de finition coloré/transparent.

13. Substrat revêtu d'une couche séchée et durcie de la composition selon la revendication 1.

14. Substrat selon la revendication 13, où le substrat est une carcasse automobile ou un élément de carrosserie.

15. Composition de revêtement de l'une quelconque des revendications 1 à 12, **caractérisée en ce que**
(a) est un composé non gazeux dont le point d'ébullition dépasse 100°C à la pression atmosphérique et dont la masse moléculaire moyenne en nombre est comprise entre 300 et 3000; et
(b) est un amorceur de polymérisation thermique liquide de type peroxyde.
